(19) Europäisches Patentamt / European Patent Office / Office européen des brevets

(11) **EP 3 685 485 B1**

(12) **FASCICULE DE BREVET EUROPEEN**

(45) Date de publication et mention de la délivrance du brevet:
**30.06.2021   Bulletin 2021/26**

(21) Numéro de dépôt: **18766298.6**

(22) Date de dépôt: **18.09.2018**

(51) Int Cl.:
*B60L 53/20* (2019.01)      *H02J 7/02* (2016.01)
*H02M 3/337* (2006.01)      *H02M 7/217* (2006.01)
*H02M 1/00* (2006.01)      *H02M 3/28* (2006.01)

(86) Numéro de dépôt international:
**PCT/EP2018/075224**

(87) Numéro de publication internationale:
**WO 2019/057719 (28.03.2019 Gazette 2019/13)**

(54) **PROCÉDÉ DE COMMANDE D'UN SYSTÈME DE CHARGE D'UNE BATTERIE DE TRACTION**

VERFAHREN ZUR STEUERUNG EINES LADESYSTEMS EINER TRAKTIONBATTERIE

METHOD FOR CONTROLLING A CHARGING SYSTEM FOR A TRACTION BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **22.09.2017   FR 1758777**

(43) Date de publication de la demande:
**29.07.2020   Bulletin 2020/31**

(73) Titulaires:
• **Renault S.A.S.**
  **92100 Boulogne-Billancourt (FR)**
• **Nissan Motor Co. Ltd**
  **Yokohama-Shi, Kanagawa 220-8623 (JP)**

(72) Inventeurs:
• **KVIESKA, Pedro**
  **78000 VERSAILLES (FR)**
• **MERIENNE, Ludovic**
  **91190 Gif Sur Yvette (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
**US-A1- 2008 204 098      US-A1- 2011 309 811**
**US-B1- 8 854 848**

• **HERMINJARD J ED - EPE ASSOCIATION: "THREE-PHASE UNITE POWER FACTOR AC/DC CONVERTER (PFC) WITH DUAL ISOLATED DC/DC CONVERTER FOR A BATTERY CHARGER", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. 8, 7 septembre 1999 (1999-09-07), pages 1-10, XP000878497, ISBN: 978-90-75815-04-7 cité dans la demande**

**Description**

La présente invention se rapporte de manière générale au domaine de l'électronique de puissance et concerne plus précisément un procédé de commande d'un chargeur pour batterie de traction d'un véhicule électrique ou hybride.

Les systèmes de charge embarqués pour véhicules électriques ou hybrides permettant à un tel véhicule de se recharger sur une borne de recharge délivrant un courant alternatif, comportent un convertisseur courant alternatif - courant continu pour alimenter la batterie de traction du véhicule. Afin de garantir la sécurité électrique, ces systèmes de charge comportent généralement un ou plusieurs transformateurs à isolation galvanique.

Un tel système de charge pour véhicule électrique est décrit dans la publication de l'EPE de Lausanne de 1999 (« European Conférence on Power Electronics and Applications ») intitulée « Three-Phase Unity Power Factor AC/DC Converter (PFC) with Dual Isolated DC/DC Converter for a Battery Charger » et ayant pour auteurs J. Herminjard, C. Zimmermann et R. Monnier. Ce système de charge comporte un étage d'entrée redresseur de courant et correcteur de facteur de puissance, connecté en sortie à deux convertisseurs courant continu - courant continu eux-mêmes reliés en sortie en parallèle sur la batterie à charger. Ces deux convertisseurs courant continu - courant continu assurent l'isolation galvanique du système de charge. Un tel système de charge permet en outre la recharge du véhicule sur une borne monophasée ou triphasée, présente un faible encombrement et permet de limiter le dimensionnement des composants, de diminuer les harmoniques de courant et de diminuer les pertes par commutation en optimisant la commande aussi bien en charge monophasée qu'en charge triphasée comme décrit dans les demandes de brevet de numéro de dépôt FR1662398, FR1659116, FR1659118, FR1660788.

Dans ce système de charge, les deux convertisseurs courant continu - courant continu sont des convertisseurs résonants LLC série, en théorie identiques. Leur commande est donc symétrique. En réalité, il existe souvent des différences entre ces deux convertisseurs courant continu - courant continu, liées principalement à la dispersion et au vieillissement des pièces, ainsi qu'aux différences de température au sein du système de charge. La dispersion des pièces dépend de leur montage en usine et ne varie pas une fois ces pièces montées dans le système de charge. Les différences de température dépendent de plusieurs facteurs et sont établies après un temps de charge de l'ordre d'une dizaine de minutes. Enfin le vieillissement des pièces évolue lentement pendant toute la durée de vie du système de charge.

Les différences entre les deux convertisseurs de courant continu - courant continu d'un tel système de charge sont donc difficilement maîtrisables. De plus le vieillissement du système de charge augmente ces différences, de sorte que le convertisseur courant continu - courant continu de moins bon rendement s'échauffera davantage que l'autre convertisseur courant continu - courant continu au cours du temps, ce qui accélérera son vieillissement et diminuera encore son rendement. De ce fait la diminution du rendement global d'un tel système de charge s'accélère au cours du temps.

Un des buts de l'invention est de remédier à au moins une partie des inconvénients de la technique antérieure en fournissant un procédé de commande d'un tel système de charge, qui optimise le rendement global de ce système de charge, et le préserve au cours du temps.

A cette fin, l'invention propose un procédé de commande d'un système de charge d'une batterie de traction, connecté à un réseau d'alimentation monophasé ou triphasé, ledit système de charge comportant un étage d'entrée redresseur connecté en sortie à deux capacités reliées par un point milieu, un convertisseur courant continu - courant continu étant connecté en entrée aux bornes d'une desdites capacités entre une borne positive de ladite capacité et ledit point milieu, et un autre convertisseur courant continu - courant continu étant connecté en entrée aux bornes de l'autre desdites capacités entre une borne négative de ladite autre capacité et ledit point milieu, les sorties desdits convertisseurs courant continu - courant continu étant connectées en parallèle aux bornes de ladite batterie de traction, ledit procédé de commande étant caractérisé en ce qu'il comporte les étapes de :

- augmentation de la puissance transmise par le convertisseur courant continu - courant continu de meilleur rendement parmi lesdits convertisseurs courant continu - courant continu, et
- diminution de la puissance transmise par l'autre desdits convertisseurs courant continu - courant continu,

par rapport à un fonctionnement initial dudit système de charge.

Grâce à l'invention, on adapte la puissance de charge délivrée par chacun des deux convertisseurs courant continu - courant continu en fonction de leurs rendements respectifs, ce qui diminue le vieillissement prématuré du convertisseur courant continu - courant continu de moins bon rendement. Le rendement global du système de charge s'en trouve ainsi amélioré, sans nécessiter de modifications matérielles du système.

Selon une caractéristique avantageuse du procédé de commande selon l'invention, lesdites étapes d'augmentation et de diminution sont précédées d'une étape de caractérisation des rendements desdits convertisseurs courant continu - courant continu. Cette étape de caractérisation permet d'adapter l'augmentation de la puissance transmise ou la diminution de la puissance transmise par chacun des convertisseurs courant continu - courant continu en fonction de l'évolution de chacun de ces convertisseurs au cours du temps. L'étape de caractérisation est préférentiellement lancée régulièrement avant ou pendant une charge de la batterie de traction, par exemple tous les mois.

Selon une autre caractéristique avantageuse de l'invention, ladite étape de caractérisation comporte les sous-étapes de :

- chargement de la batterie de traction en utilisant seulement l'un desdits convertisseurs courant continu - courant continu, la puissance de charge de ladite batterie de traction évoluant suivant une rampe de puissance,
- chargement de la batterie de traction en utilisant seulement l'autre desdits convertisseurs courant continu - courant continu, la puissance de charge de ladite batterie de traction évoluant suivant une rampe de puissance,
- mesures en temps réel de la puissance entrant dans ledit étage d'entrée redresseur, et de la puissance de charge entrant dans ladite batterie de traction pendant lesdites sous-étapes de chargement,
- calcul des rapports en fonction de ladite puissance de charge entre d'une part lesdites mesures de puissance entrant dans ladite batterie de traction et d'autre part lesdites mesures de puissance entrant dans ledit étage d'entrée redresseur, pour chacune desdites sous-étapes de chargement.

Ces étapes permettent une caractérisation fine des rendements des convertisseurs courant continu - courant continu en fonction de la puissance de charge de la batterie de traction.

Avantageusement, ledit procédé de commande selon l'invention comporte une étape de sélection dudit convertisseur courant continu - courant continu de meilleur rendement en fonction d'une consigne de puissance de charge, lors de laquelle ledit convertisseur courant continu - courant continu de meilleur rendement est choisi comme celui ayant le meilleur rapport calculé à l'étape de caractérisation pour la puissance de charge correspondant à ladite consigne de puissance de charge.

Le rendement global du système de charge est ainsi optimisé en fonction de la puissance de charge de la batterie de traction.

Avantageusement encore, ledit procédé de commande selon l'invention comporte une étape de modification de consignes des courants arrivant aux bornes desdites capacités, lesdits courants étant régulés par la commande dudit étage d'entrée redresseur, les consignes des tensions en entrée desdits convertisseurs courant continu - courant continu étant maintenues égales, lesdites consignes de courants modifiées maximisant, pour une consigne de puissance de charge de ladite batterie de traction, le rendement global dudit système de charge exprimé en fonction de ladite consigne de puissance de charge et des rendements desdits convertisseurs courant continu - courant continu multipliés par leurs puissances d'entrée respectives.

La régulation de la puissance transmise par chacun des convertisseurs courant continu - courant continu en régulant les courants arrivant sur les capacités de sortie de l'étage d'entrée redresseur, utilise un découplage entre la régulation de l'étage d'entrée redresseur, qui régule les courants arrivant sur ses capacités de sortie, et la régulation des convertisseurs courant continu - courant continu, qui régulent uniquement leurs tensions d'entrée. Ainsi les capacités de sortie de l'étage d'entrée redresseur absorbent beaucoup moins d'ondulations de courant, ce qui leur permet d'être sous-dimensionnées par rapport à celles d'un chargeur à pont redresseur Vienna classique.

Alternativement ou parallèlement, le procédé de commande selon l'invention comporte une étape de désactivation du convertisseur courant continu - courant continu de moins bon rendement parmi lesdits convertisseurs courant continu - courant continu, lorsque ledit réseau d'alimentation est un réseau d'alimentation monophasé. Cette alternative présente l'avantage en charge monophasée, de limiter les pertes électriques.

Selon une caractéristique avantageuse de l'invention, ledit étage d'entrée redresseur est également correcteur de facteur de puissance et élévateur de tension, et lesdits convertisseurs courant continu - courant continu comportent chacun un transformateur d'isolation galvanique. Cette topologie de convertisseur est spécialement adaptée pour la charge d'une batterie de traction de tension à vide élevée, de l'ordre de 400V, dans un véhicule électrique ou hybride.

Préférentiellement, ledit étage d'entrée redresseur comporte des bobines d'entrée et un redresseur Vienna triphasé, chacune desdites bobines d'entrée étant connectée à une entrée différente du pont de diodes dudit redresseur Vienna triphasé. Cette topologie présente l'avantage d'intégrer avec peu de composants les fonctions d'élévateur, redresseur et correcteur de facteur de puissance, tout en présentant deux tensions de sortie.

D'autres caractéristiques et avantages apparaîtront à la lecture d'un mode de réalisation préféré décrit en référence aux figures dans lesquelles :

- la figure 1 représente un système de charge pour véhicule électrique ou hybride,
- la figure 2 représente des étapes d'un procédé de commande selon l'invention, du système de charge de la figure 1, dans ce mode de réalisation préféré,
- la figure 3 représente le rendement global dudit système de charge en fonction de la puissance de charge d'un des convertisseurs courant continu - courant continu dudit système de charge lorsque ceux-ci sont identiques,
- et la figure 4 représente le rendement global dudit système de charge en fonction de la puissance de charge d'un desdits convertisseurs courant continu
- courant continu dans un contexte où lesdits convertisseurs courant continu - courant continu présentent des rendements différents.

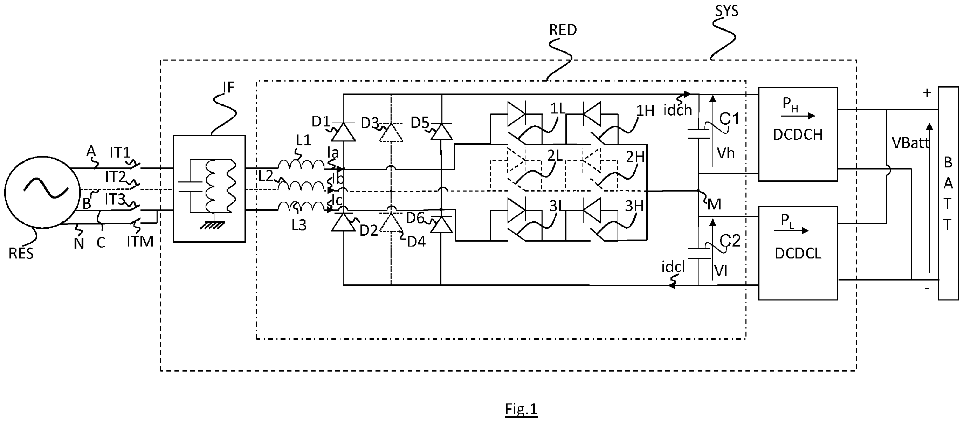

Selon un mode de réalisation préféré de l'invention représenté à la **figure 1,** un système de charge SYS pour véhicule électrique ou hybride commandé par un procédé de commande selon l'invention, comporte :

- un filtre d'entrée IF résistif, capacitif et inductif, permettant de répondre aux exigences de compatibilité électromagnétique du réseau d'alimentation RES auquel il est raccordé par l'intermédiaire d'une prise de charge de type 2 ou 3 (norme CEI 62196-1),
- un étage d'entrée redresseur RED connecté d'une part au filtre d'entrée IF et d'autre part à deux convertisseurs courant continu - courant continu DCDCH et DCDCL,
- le convertisseur DCDCH, connecté en entrée à une première capacité de sortie C1 de l'étage d'entrée redresseur RED, et en sortie à la batterie de traction BATT d'un véhicule dans lequel est embarqué le système de charge SYS,
- et le convertisseur DCDCL, connecté en entrée à une deuxième capacité de sortie C2 de l'étage d'entrée redresseur RED, et en sortie à la batterie de traction BATT.

L'étage d'entrée redresseur RED comporte des bobines d'entrée L1, L2 et L3, connectées chacune entre une sortie du filtre d'entrée IF et une borne d'entrée d'un pont de diodes D1, D2, D3, D4, D5 et D6 d'un redresseur Vienna triphasé de l'étage d'entrée redresseur RED. Ainsi chaque bobine L1 à L3 est apte à être reliée en charge triphasée par l'intermédiaire du filtre d'entrée IF et aux interrupteurs respectifs IT1, IT2 et IT3 à une phase d'alimentation A, B et C du réseau RES qui est alors un réseau d'alimentation triphasé. Un interrupteur ITM permet de connecter la bobine L3 correspondant à la phase C du réseau RES au neutre N du réseau d'alimentation RES. Ainsi lorsque le réseau d'alimentation RES est un réseau d'alimentation monophasé, seules les bobines d'entrée L1 et L3 sont connectées au réseau d'alimentation RES, respectivement à la phase d'alimentation et au neutre N, les interrupteurs IT1 et ITM étant fermés et les interrupteurs IT3 et IT2 restant ouverts lors d'une charge monophasée de la batterie BATT. Dans le cas d'une charge monophasée le bras de l'étage redresseur d'entrée RED correspondant à la bobine d'entrée L2 ne reçoit donc aucun courant.

Les bobines d'entrée L1, L2 et L3 sont également connectées en sortie à une branche de commutation respective du redresseur Vienna triphasé, formée chacune de deux transistors MOS (d'après l'anglais « Metal Oxide Semiconductor ») en série, respectivement 1L et 1H, 2L et 2H, 3L et 3H. Une diode est montée en anti-parallèle sur chacun de ces transistors. Ainsi lorsque le courant d'entrée respectif Ia, Ib, ou Ic de la phase A, B ou C est positif, le transistor 1L, 2L ou 3L n'est pas piloté (i.e. est maintenu ouvert ou fermé) et le transistor 1H, 2H ou 3H est commuté pour réguler le courant idcl du bus de sortie négatif du pont de diodes. Lorsque le courant d'entrée respectif Ia, Ib, ou Ic de la phase A, B ou C est négatif, le transistor 1H, 2H ou 3H n'est pas piloté et le transistor 1L, 2L ou 3L est commuté pour réguler le courant idch du bus de sortie positif du pont de diodes.

Par sa commande, l'étage d'entrée redresseur RED assure à la fois les fonctions d'élévateur de tension, de redresseur et de correcteur de facteur de puissance.

Les convertisseurs courant continu - courant continu DCDCH et DCDCL sont des convertisseurs résonant LLC série. Chacun d'entre eux comporte un pont complet en H avec diodes de roue libre, aux bornes de sortie desquelles est connecté une structure résonante série comportant une inductance, une capacité et la bobine primaire d'un transformateur. Le secondaire du transformateur est connecté à un pont à diodes dont la sortie est reliée à une capacité de lissage. Cette capacité de lissage est connectée en parallèle à la batterie de traction BATT.

Le convertisseur courant continu - courant continu DCDCH connecté entre le bus positif de sortie du pont de diodes et un point M situé entre les capacités de sortie C1 et C2 de l'étage d'entrée redresseur RED, régule sa tension d'entrée Vh. Pour cela il adapte le gain en tension entre sa tension d'entrée et la tension Vbatt de la batterie de traction BATT, en faisant travailler les interrupteurs de son pont complet à un rapport cyclique fixe (50%) mais à fréquence variable. Par défaut, c'est-à-dire lorsque l'invention n'est pas utilisée, cette tension est régulée de sorte à ce que le convertisseur courant - courant continu DCDCH transmette une puissance $P_H$ égale à la moitié de la consigne de puissance de charge de la batterie de traction BATT, l'autre moitié de la puissance de charge devant être fournie par le convertisseur courant continu - courant continu DCDCL.

De même le convertisseur courant continu - courant continu DCDCL connecté entre le point milieu M et le bus négatif de sortie du pont de diodes régule sa tension d'entrée VI, de sorte à ce que le convertisseur courant - courant continu DCDCL transmette une puissance $P_L$ égale à la moitié de la consigne de puissance de charge de la batterie de traction BATT.

Il est à noter qu'on appelle dans cette demande batterie de traction, une batterie d'accumulateurs de puissance assez importante pour assurer la traction ou la propulsion d'un véhicule électrique ou hybride. La tension Vbatt de la batterie de traction BATT atteint ainsi 400V (volts) lorsqu'elle est complètement chargée. Le système de charge SYS fournit typiquement une puissance de charge allant jusqu'à 22kW (kilowatts) lorsqu'il est branché sur un réseau d'alimentation triphasé, et jusqu'à 7kW lorsqu'il est branché sur un réseau d'alimentation monophasé.

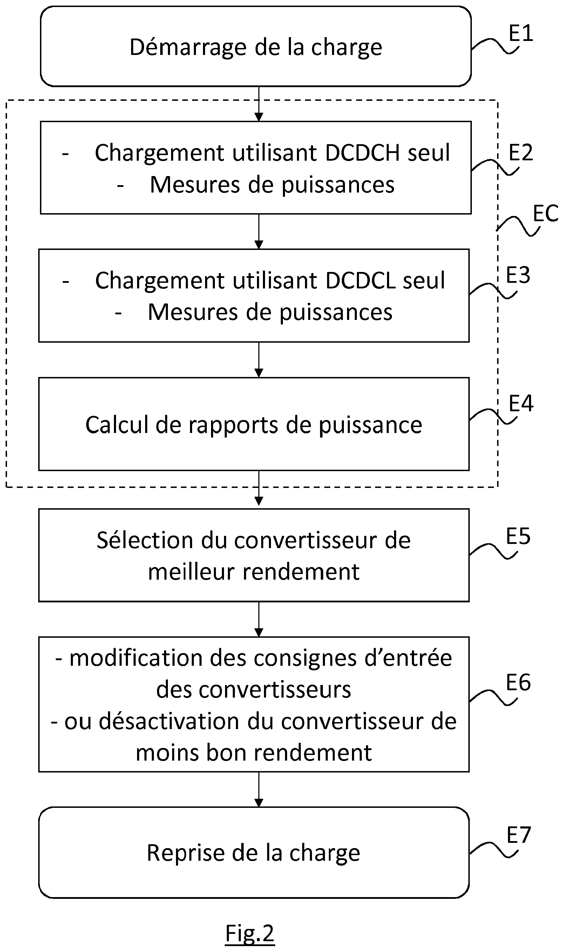

En référence à la **figure 2,** le procédé de commande selon l'invention est représenté sous la forme d'un algorithme comportant des étapes E1 à E7.

Le procédé est mis en œuvre principalement de manière logicielle à la fois dans le calculateur principal du véhicule et dans les moyens de contrôle du système de charge. Plus précisément, le calculateur principal envoie des données telles qu'une consigne de puissance de charge de la batterie ou une commande d'activation du système de charge. Les moyens de contrôle du système de charge sont par exemple une carte FPGA (d'après l'anglais «Field Programmable Gate Arrays ») implémentant les étapes E2 à E7, ou bien un micro-contrôleur.

L'étape E1 est le démarrage d'une charge de la batterie de traction BATT, utilisant les deux convertisseurs courant continu - courant continu DCDCH et DCDCL.

L'étape suivante EC est la caractérisation des rendements des convertisseurs courant continu - courant continu DCDCH et DCDCL. Cette étape a lieu par exemple toutes les vingt charges de la batterie et est lancée au bout de quinze minutes de charge. Autrement dit si cette étape de caractérisation EC a déjà eu lieu lors de la dernière charge de la batterie BATT, le procédé de commande selon l'invention ne comprend pas cette étape EC mais seulement l'étape E1 avec des consignes de commande modifiées lors de précédentes étapes E1 à E7.

L'étape EC de caractérisation comporte elle-même plusieurs sous-étapes :

La première sous-étape E2 est la charge de la batterie de traction BATT en utilisant seulement le convertisseur DCDCH, et en suivant une rampe de puissance d'entrée du système de charge SYS démarrant à 0kW et s'arrêtant à la puissance maximale disponible sur le réseau RES et acceptée par le convertisseur DCDCH, soit 11kW à 14kW si le réseau est triphasé. Il est à noter que la sous-étape E2 est immédiatement précédée d'une coupure de la charge en cours à l'étape E1.

En charge monophasée, l'utilisation du seul convertisseur DCDCH pour la charge de la batterie BATT s'effectue de la façon suivante :

- lorsque le courant Ia est positif, on ferme les interrupteurs 3L et 3H, le courant étant hâché avec l'interrupteur 1H.
- et lorsque le courant Ia est négatif, on ferme les interrupteurs 1L et 1H, le courant étant hâché avec l'interrupteur 3H.

Ainsi lorsque le courant Ia est positif et que l'interrupteur 1H est fermé, les bobines L1 et L3 stockent l'énergie. Lorsque le courant Ia est positif et que l'interrupteur 1H est ouvert, le courant passe dans la diode D1, la capacité C1 et la branche de commutation comportant les interrupteurs 3L et 3H.

De même lorsque le courant Ia est négatif et que l'interrupteur 3H est fermé, les bobines L1 et L3 stockent le courant. Lorsque le courant Ia est négatif et que l'interrupteur 3H est ouvert, le courant passe dans la diode D5, la capacité C1 et la branche de commutation comportant les interrupteurs 1L et 1H.

En charge triphasée, lors de cette sous-étape E2 le même type de commande est utilisée : en fonction de la portion de période électrique considérée, on ferme les interrupteurs d'une branche de commutation correspondant à une phase d'alimentation dont le courant Ia, Ib ou Ic est négatif sur cette portion, et on hache l'interrupteur haut (1H, 2H ou 3H) d'une branche de commutation correspondant à une phase d'alimentation dont le courant Ia, Ib ou Ic est positif sur cette portion. Néanmoins, en charge triphasée, la tension de la capacité C1 ne pouvant excéder 450V environ, la charge de la batterie BATT est coupée pendant cette sous-étape E2 dès que la tension aux bornes de la capacité C1 dépasse 450V, et est reprise dès que la tension aux bornes de la capacité C1 redescend sous cette valeur. Le courant puisé par le convertisseur DCDCH est alors sinusoïdal par morceau. En variante on ne coupe pas la charge lorsque la tension aux bornes de la capacité C1 dépasse 450V. Ces deux solutions pour gérer le dépassement de tension de la capacité C1 ne sont pas gênantes dans le sens où la sous-étape E2 ne dure que quelques secondes (typiquement 6 secondes). Cependant la solution proposée en variante est moins représentative du fonctionnement nominal du convertisseur DCDCH.

Lors de cette sous-étape E2, on mesure également en temps réel la puissance entrant dans l'étage d'entrée redresseur RED. Cette mesure est effectuée grâce aux capteurs de courant et de tension présents en entrée de l'étage d'entrée redresseur RED. Plus précisément on détermine la puissance d'entrée du système de charge SYS en multipliant les mesures de tension et de courant en entrée du système de charge SYS. On mesure également en temps réel pendant cette sous-étape E2, le courant entrant dans la batterie de traction BATT et la tension Vbatt, afin de mesurer/calculer la puissance de charge entrant dans la batterie de traction BATT.

La sous-étape suivante E3 est la charge de la batterie de traction BATT en utilisant seulement le convertisseur DCDCL, en suivant une rampe de puissance d'entrée du système de charge SYS démarrant à 0kW et s'arrêtant à la puissance maximale disponible sur le réseau RES et acceptée par le convertisseur DCDCH, soit 11kW à 14kW si le réseau est triphasé. L'utilisation d'un seul convertisseur DCDCL pour cette charge est réalisée par une commande de l'étage d'entrée redresseur RED symétrique à celle utilisée lors de la sous-étape E2. Notamment, en charge monophasée :

- lorsque le courant Ia est positif, on ferme les interrupteurs 1L et 1H, le courant étant hâché avec l'interrupteur 3L.
- et lorsque le courant Ia est négatif, on ferme les interrupteurs 3L et 3H, le courant étant hâché avec l'interrupteur 1L.

De même en charge triphasée cette commande est adaptée préférentiellement de manière à couper la charge dès que la tension aux bornes de la capacité C2 dépasse 450V, et à la reprendre dès que la tension aux bornes de la capacité C2 redescend sous cette valeur.

Lors de cette sous-étape E3, on mesure également en temps réel la puissance entrant dans l'étage d'entrée redresseur RED. Cette mesure est effectuée grâce aux capteurs de courant et de tension présents en entrée de l'étage d'entrée redresseur RED. Plus précisément on détermine la puissance d'entrée du système de charge SYS en multipliant les mesures de tension et de courant en entrée du système de charge SYS. On mesure également en temps réel pendant cette sous-étape E3, le courant entrant dans la batterie de traction BATT et la tension Vbatt, afin de mesurer/calculer la puissance de charge entrant dans la batterie de traction BATT.

La sous-étape suivante E4 est le calcul du rapport $\rho_H$ entre la puissance mesurée entrant dans la batterie BATT et la puissance mesurée entrant dans le système de charge SYS, pour chaque valeur mesurée de puissance d'entrée du système de charge pendant la sous-étape E2. Ce rapport fonction de la puissance d'entrée du système de charge est représentatif du rendement du convertisseur courant continu - courant continu DCDCH.

Dans cette sous-étape E4, on calcule également le rapport $\rho_L$ entre la puissance mesurée entrant dans la batterie BATT et la puissance mesurée entrant dans le système de charge SYS, pour chaque valeur mesurée de puissance d'entrée du système de charge pendant la sous-étape E3. Ce rapport fonction de la puissance d'entrée du système de charge est représentatif du rendement du convertisseur courant continu - courant continu DCDCL.

L'étape suivante E5 du procédé de commande selon l'invention est la sélection du convertisseur courant continu - courant continu de meilleur rendement en fonction d'une consigne de puissance de charge P$_{Batt\_ref}$ fournie par le calculateur principal. Pour cela, on choisit le convertisseur courant continu - courant continu ayant le meilleur rendement $\rho_H$ ou $\rho_L$ pour la puissance d'entrée du système de charge correspondant à la consigne de puissance de charge P$_{Batt\_ref}$. On suppose, dans cet exemple d'utilisation de l'invention, que le convertisseur courant continu - courant continu de meilleur rendement choisi dans cette étape est le convertisseur courant continu - courant continu DCDCH.

L'étape suivante E6 est la modification des consignes d'entrée des convertisseurs courant continu - courant continu DCDCH et DCDCL de façon à maximiser le rendement global p du système de charge SYS étant donné les rendements $\rho_H$ et $\rho_L$ de ces convertisseurs en fonction de la puissance de charge. Le rendement global p du système de charge SYS s'exprime en fonction de la puissance transmise P$_H$ au convertisseur DCDCH selon l'expression suivante, en prenant comme puissance d'entrée du système SYS la consigne de puissance de charge de la batterie BATT :

$$\rho = \frac{\rho_H * P_H + \rho_L * (P_{Batt\_ref} - P_H)}{P_{Batt\_ref}}$$

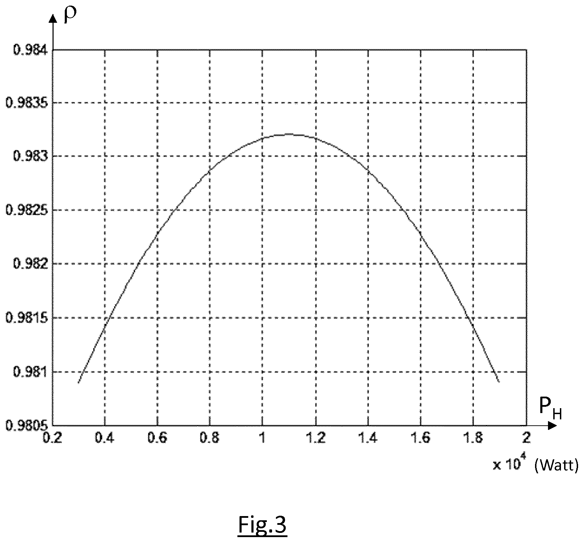

La courbe correspondant à ce rendement global p dans le cas où les deux convertisseurs courant continu - courant continu DCDCH et DCDCL sont identiques, pour une consigne de puissance de charge de la batterie BATT P$_{Batt\_ref}$ égale à 22kW, est représentée sur la **figure 3.** On constate que dans ce cas, le meilleur rendement global est atteint lorsque les deux convertisseurs DCDCH et DCDCL fournissent chacun 11kW. Dans un tel cas, il est inutile de modifier les consignes d'entrée des convertisseurs DCDCH et DCDCL, qui par défaut correspondent à une puissance à fournir par chacun des convertisseurs courant continu - courant continu de 11kW pour une consigne de puissance de charge de la batterie BATT P$_{Batt\_ref}$ égale à 22kW.

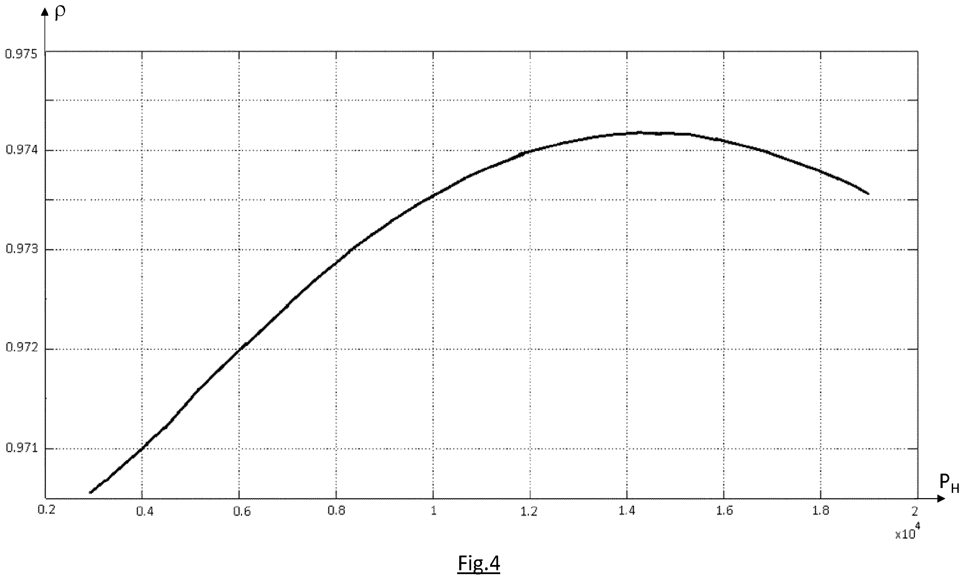

Dans cet exemple de réalisation de l'invention, la courbe correspondant à ce rendement global p est représentée sur la **figure 4,** pour laquelle les 2 convertisseurs ne sont pas équivalents. On constate que pour une consigne de puissance de charge de la batterie BATT P$_{Batt\_ref}$ égale à 22kW, le rendement optimal correspond à une puissance d'entrée du convertisseur courant continu - courant continu DCDCH de 14kW. On considère, dans cet exemple de réalisation de l'invention, que 14kW est en dessous de la puissance maximale admissible par chacun des convertisseurs DCDCH et DCDCL. Dans cette étape E6, on augmente donc la consigne d'entrée du convertisseur DCDCH et on réduit la consigne d'entrée du convertisseur DCDCL de manière à :

- augmenter la consigne de puissance d'entrée du convertisseur DCDCH à 14kW, par rapport au fonctionnement initial du système où par défaut cette consigne de puissance est à 11kW pour une consigne de puissance de charge de la batterie de 22kW,
- et à diminuer la consigne de puissance d'entrée du convertisseur DCDCL à 8kW, par rapport au fonctionnement initial du système où par défaut cette consigne de puissance est à 11kW pour une consigne de puissance de charge de la batterie de 22kW.

Ces modifications des consignes d'entrée s'effectuent préférentiellement en modifiant la façon dont l'étage redresseur alimente les deux convertisseurs courant continu - courant continu, c'est-à-dire en modifiant les consignes de courant idch et idcl. En effet, dans ce mode préféré de réalisation de l'invention, les tensions Vh et Vl des capacités C1 et C2 sont régulées par la commande des convertisseurs courant continu - courant continu, l'étage d'entrée redresseur régulant indépendamment les courants idch et idcl. Dans ce cet exemple d'utilisation de l'invention, on augmente donc la consigne de courant idch, et on diminue la consigne de courant idcl, les tensions d'entrée Vh et Vl des deux convertisseurs étant maintenues constantes. Le convertisseur DCDCH devra donc fournir plus de puissance à la batterie que le convertisseur DCDCL. En variante, on modifie les consignes de tension d'entrée des convertisseurs, les consignes de courant idch et idcl étant maintenues sensiblement égales.

En variante, notamment lorsque la charge est monophasée, dans cette étape E6 on désactive le convertisseur courant continu - courant continu DCDCL qui est de moins bon rendement, et on modifie la consigne de tension d'entrée du convertisseur DCDCH de sorte à ce que celui-ci fournisse une puissance de charge à la batterie BATT égale à la consigne de puissance de charge de la batterie BATT, par exemple égale à 7kW. On utilise alors la commande du convertisseur courant continu - courant continu DCDCH décrite en lien avec la sous-étape E2.

Dans cette variante de l'étape E6, lorsque la consigne de puissance de charge de la batterie BATT ne permet pas de ne faire travailler qu'un seul convertisseur courant continu - courant continu du fait de son dimensionnement, cette désactivation du convertisseur DCDCL de moins bon rendement n'est effectuée que lorsque la valeur absolue du courant entrant dans le convertisseur DCDCH de meilleur rendement est inférieure à un seuil. Ainsi lorsque la valeur absolue du courant entrant dans le convertisseur DCDCH de meilleur rendement est inférieure à un seuil admissible par le convertisseur DCDCH, celui-ci transmet toute la puissance de charge à la batterie de traction BATT, l'autre convertisseur DCDCL étant désactivé. En revanche, lorsque la valeur absolue du courant entrant dans le convertisseur DCDCH de meilleur rendement est supérieure à un seuil admissible par le convertisseur DCDCH, la puissance transmise par chacun des convertisseurs DCDCL et DCDCH à la batterie de traction BATT est répartie de manière similaire à la variante principale de réalisation de l'étape E6, de manière à optimiser le rendement global du système de charge SYS.

Les modifications des commandes des convertisseurs dans cette étape E6 sont mémorisées dans les moyens de contrôle du système de charge SYS afin d'être reprises lors d'une prochaine charge de la batterie BATT n'incluant pas d'étape de caractérisation des rendements des convertisseurs DCDCH et DCDCL.

Enfin l'étape E7 est la reprise de la charge de la batterie BATT, en utilisant les consignes d'entrée modifiées à l'étape E6 des convertisseurs DCDCH et DCDCL. Ainsi la puissance transmise par le convertisseur DCDCH est augmentée par rapport au fonctionnement initial du système de charge SYS, c'est-à-dire par rapport à son fonctionnement par défaut en sortie d'usine, et la puissance transmise par le convertisseur DCDCL est diminuée par rapport au fonctionnement initial du système de charge SYS.

Il est à noter que le procédé selon l'invention peut amener le comportement des convertisseurs DCDCH et DCDCL à s'inverser au cours du temps, c'est-à-dire que le convertisseur de moins bon rendement sera DCDCH au bout d'un certain nombre de charges de la batterie de traction BATT, dans cet exemple de réalisation de l'invention.

Par ailleurs, d'autres variantes de réalisation de l'invention sont possibles. Il est en effet possible d'inverser l'ordre des sous-étapes E2 et E3 par exemple. Il est également équivalent d'utiliser la puissance d'entrée de chaque convertisseur courant continu - courant continu ou la puissance d'entrée du système de charge dans les sous-étapes E2 et E3. Les rendements des convertisseurs sont de plus exprimables de façon équivalente aussi bien en fonction de la puissance d'entrée du système de charge ou de la puissance de charge de la batterie de traction.

## Revendications

1. Procédé de commande d'un système de charge (SYS) d'une batterie de traction (BATT), connecté à un réseau (RES) d'alimentation monophasé ou triphasé, ledit système de charge (SYS) comportant un étage d'entrée redresseur (RED) connecté en sortie à deux capacités (C1, C2) reliées par un point milieu (M), un convertisseur courant continu - courant continu (DCDCH) étant connecté en entrée aux bornes d'une desdites capacités (C1) entre une borne positive de ladite capacité (C1) et ledit point milieu (M), et un autre convertisseur courant continu - courant continu (DCDCL) étant connecté en entrée aux bornes de l'autre desdites capacités (C2) entre une borne négative de ladite autre capacité (C2) et ledit point milieu (M), les sorties desdits convertisseurs courant continu - courant continu (DCDCH, DCDCL) étant connectées en parallèle aux bornes de ladite batterie de traction (BATT), ledit procédé de commande étant **caractérisé en ce qu'**il comporte les étapes de :

   - augmentation (E7) de la puissance transmise ($P_H$) par le convertisseur courant continu - courant continu de meilleur rendement (DCDCH) parmi lesdits convertisseurs courant continu - courant continu (DCDCH, DCDCL), et diminution (E7) de la puissance transmise par l'autre desdits convertisseurs courant continu-courant continu (DCDCL), par rapport à un fonctionnement initial dudit système de charge (SYS).

2. Procédé de commande selon la revendication 1, **caractérisé en ce que** lesdites étapes d'augmentation et de diminution (E7) sont précédées d'une étape de caractérisation (EC) des rendements desdits convertisseurs courant continu - courant continu (DCDCH, DCDCL).

**3.** Procédé de commande selon la revendication 2, **caractérisé en ce que** ladite étape de caractérisation (EC) comporte les sous-étapes de :

- chargement (E2) de la batterie de traction (BATT) en utilisant seulement l'un desdits convertisseurs courant continu - courant continu (DCDCH), la puissance de charge de ladite batterie de traction (BATT) évoluant suivant une rampe de puissance,

- chargement (E3) de la batterie de traction (BATT) en utilisant seulement l'autre desdits convertisseurs courant continu - courant continu (DCDCL), la puissance de charge de ladite batterie de traction (BATT) évoluant suivant une rampe de puissance,

- mesures (E2, E3) en temps réel de la puissance entrant dans ledit étage d'entrée redresseur (RED), et de la puissance de charge entrant dans ladite batterie de traction (BATT) pendant lesdites sous-étapes de chargement (E2, E3),

- calcul (E4) des rapports en fonction de ladite puissance de charge entre d'une part lesdites mesures de puissance entrant dans ladite batterie de traction (BATT) et d'autre part lesdites mesures de puissance entrant dans ledit étage d'entrée redresseur (RED), pour chacune desdites sous-étapes de chargement (E2, E3).

**4.** Procédé de commande selon la revendication 3, **caractérisé en ce qu'**il comporte une étape de sélection (E5) dudit convertisseur courant continu - courant continu de meilleur rendement (DCDCH) en fonction de d'une consigne de puissance de charge, lors de laquelle ledit convertisseur courant continu - courant continu de meilleur rendement (DCDCH) est choisi comme celui ayant le meilleur rapport calculé à l'étape de caractérisation (EC) pour la puissance de charge correspondant à ladite consigne de puissance de charge.

**5.** Procédé de commande selon l'une quelconque des revendications 1 à 4, **caractérisé en ce qu'**il comporte une étape (E6) de modification de consignes des courants arrivant aux bornes desdites capacités, lesdits courants étant régulés par la commande dudit étage d'entrée redresseur (RED), les consignes des tensions en entrée desdits convertisseurs courant continu - courant continu (DCDCH, DCDCL) étant maintenues égales, lesdites consignes de courants modifiées maximisant, pour une consigne de puissance de charge de ladite batterie (BATT) de traction, le rendement global ($\rho$) dudit système de charge (SYS) exprimé en fonction de ladite consigne de puissance de charge et des rendements desdits convertisseurs (DCDCH, DCDCL) courant continu - courant continu multipliés par leurs puissances d'entrée respectives.

**6.** Procédé de commande selon l'une quelconque des revendications 1 à 5, **caractérisé en ce qu'**il comporte une étape de désactivation (E6) du convertisseur courant continu - courant continu de moins bon rendement (DCDCL) parmi lesdits convertisseurs courant continu - courant continu (DCDCH, DCDCL), lorsque ledit réseau d'alimentation (RES) est un réseau d'alimentation monophasé.

**7.** Procédé de commande selon l'une quelconque des revendications 1 à 6, **caractérisé en ce que** ledit étage d'entrée redresseur (RED) est également correcteur de facteur de puissance et élévateur de tension, et **en ce que** lesdits convertisseurs courant continu - courant continu (DCDCH, DCDCL) comportent chacun un transformateur d'isolation galvanique.

**8.** Procédé de commande selon l'une quelconque des revendications 1 à 7, **caractérisé en ce que** ledit étage d'entrée redresseur (RED) comporte des bobines d'entrée (L1, L2, L3) et un redresseur Vienna triphasé, chacune desdites bobines d'entrée (L1, L2, L3) étant connectée à une entrée différente du pont de diodes dudit redresseur Vienna triphasé.

**Patentansprüche**

**1.** Steuerungsverfahren eines Ladesystems (SYS) einer Antriebsbatterie (BATT), das an ein ein- oder dreiphasiges Versorgungsnetz (RES) angeschlossen ist, wobei das Ladesystem (SYS) eine Gleichrichter-Eingangsstufe (RED) aufweist, die am Ausgang an zwei Kapazitäten (C1, C2) angeschlossen ist, die durch einen Mittelpunkt (M) verbunden sind, wobei ein Gleichstrom-Gleichstrom-Wandler (DCDCH) am Eingang an die Anschlüsse einer der Kapazitäten (C1) zwischen einem positiven Anschluss der Kapazität (C1) und dem Mittelpunkt (M) angeschlossen ist, und ein anderer Gleichstrom-Gleichstrom-Wandler (DCDCL) am Eingang an die Anschlüsse der anderen der Kapazitäten (C2) zwischen einem negativen Anschluss der anderen Kapazität (C2) und dem Mittelpunkt (M) angeschlossen ist, wobei die Ausgänge der Gleichstrom-Gleichstrom-Wandler (DCDCH, DCDCL) parallel an die Anschlüsse der Antriebsbatterie (BATT) angeschlossen sind, wobei das Steuerungsverfahren **dadurch gekennzeichnet ist, dass** es die folgenden Schritte aufweist:

- Erhöhen (E7) der Leistung ($P_H$), die vom Gleichstrom-Gleichstrom-Wandler mit dem besseren Wirkungsgrad (DCDCH) von den Gleichstrom-Gleichstrom-Wandlern (DCDCH, DCDCL) übertragen wird, und Verringern (E7) der Leistung, die vom anderen der Gleichstrom-Gleichstrom-Wandler (DCDCL) übertragen wird, im Verhältnis zu einem anfänglichen Betrieb des Ladesystems (SYS).

2. Steuerungsverfahren nach Anspruch 1, **dadurch gekennzeichnet, dass** den Schritten des Erhöhens und Verringerns (E7) ein Schritt des Charakterisierens (EC) der Wirkungsgrade der Gleichstrom-Gleichstrom-Wandler (DCDCH, DCDCL) vorangeht.

3. Steuerungsverfahren nach Anspruch 2, **dadurch gekennzeichnet, dass** der Schritt des Charakterisierens (EC) die folgenden Unterschritte aufweist:

    - Laden (E2) der Antriebsbatterie (BATT) unter Nutzung nur eines der Gleichstrom-Gleichstrom-Wandler (DCDCH), wobei sich die Ladeleistung der Antriebsbatterie (BATT) gemäß einem Leistungsanstieg entwickelt,
    - Laden (E3) der Antriebsbatterie (BATT) unter Nutzung nur des anderen der Gleichstrom-Gleichstrom-Wandler (DCDCL), wobei sich die Ladeleistung der Antriebsbatterie (BATT) gemäß einem Leistungsanstieg entwickelt,
    - Messen (E2, E3) der Leistung, die in die Gleichrichter-Eingangsstufe (RED) eintritt, und der Ladeleistung, die in die Antriebsbatterie (BATT) eintritt, in Echtzeit während der Unterschritte des Ladens (E2, E3),
    - Berechnen (E4) der Verhältnisse in Abhängigkeit von der Ladeleistung zwischen einerseits den Messungen von Leistung, die in die Antriebsbatterie (BATT) eintritt, und andererseits den Messungen von Leistung, die in die Gleichrichter-Eingangsstufe (RED) eintritt, für jeden der Unterschritte des Ladens (E2, E3).

4. Steuerungsverfahren nach Anspruch 3, **dadurch gekennzeichnet, dass** es einen Schritt des Auswählens (E5) des Gleichstrom-Gleichstrom-Wandlers mit dem besseren Wirkungsgrad (DCDCH) in Abhängigkeit von einer Ladeleistungsvorgabe aufweist, bei dem der Gleichstrom-Gleichstrom-Wandler mit dem besseren Wirkungsgrad (DCDCH) als derjenige mit dem besseren Verhältnis, das beim Schritt des Charakterisierens (EC) berechnet wird, für die Ladeleistung, die der Ladeleistungsvorgabe entspricht, gewählt wird.

5. Steuerungsverfahren nach einem der Ansprüche 1 bis 4, **dadurch gekennzeichnet, dass** es einen Schritt (E6) des Änderns von Vorgaben der Ströme aufweist, die an den Anschlüssen der Kapazitäten ankommen, wobei die Ströme durch die Steuerung der Gleichrichter-Eingangsstufe (RED) geregelt werden, wobei die Spannungen am Eingang der Gleichstrom-Gleichstrom-Wandler (DCDCH, DCDCL) gleich gehalten werden, wobei die geänderten Stromvorgaben für eine Ladeleistungsvorgabe der Antriebsbatterie (BATT) den Gesamtwirkungsgrad (p) des Ladesystems (SYS) maximieren, der in Abhängigkeit von der Ladeleistungsvorgabe und den Wirkungsgraden der Gleichstrom-Gleichstrom-Wandler (DCDCH, DCDCL) ausgedrückt wird, die mit deren jeweiligen Eingangsleistung multipliziert werden.

6. Steuerungsverfahren nach einem der Ansprüche 1 bis 5, **dadurch gekennzeichnet, dass** es einen Schritt des Deaktivierens (E6) des Gleichstrom-Gleichstrom-Wandlers mit dem schlechteren Wirkungsgrad (DCDCL) von den Gleichstrom-Gleichstrom-Wandlern (DCDCH, DCDCL) aufweist, wenn das Versorgungsnetz (RES) ein einphasiges Versorgungsnetz ist.

7. Steuerungsverfahren nach einem der Ansprüche 1 bis 6, **dadurch gekennzeichnet, dass** die Gleichrichter-Eingangsstufe (RED) ebenfalls den Leistungsfaktor korrigiert und Spannung erhöht, und dadurch, dass die Gleichstrom-Gleichstrom-Wandler (DCDCH, DCDCL) jeweils einen Transformator mit galvanischer Trennung aufweisen.

8. Steuerungsverfahren nach einem der Ansprüche 1 bis 7, **dadurch gekennzeichnet, dass** die Gleichrichter-Eingangsstufe (RED) Eingangsspulen (L1, L2, L3) und einen Dreiphasen-Vienna-Gleichrichter aufweist, wobei jede der Eingangsspulen (L1, L2, L3) an einen anderen Eingang der Diodenbrücke des Dreiphasen-Vienna-Gleichrichters angeschlossen ist.

## Claims

1. Control method for a system for charging (SYS) a traction battery (BATT), which system is connected to a single-phase or three-phase supply network (RES), said charging system (SYS) including a rectifier input stage (RED) connected on the output side to two capacitors (C1, C2) joined by a midpoint (M), a DC/DC converter (DCDCH) being connected on the input side to the terminals of one of said capacitors (C1) between a positive terminal of said capacitor (C1) and said midpoint (M), and another DC/DC converter (DCDCL) being connected on the input side to the terminals of the other of said capacitors (C2) between a negative terminal of said other capacitor (C2) and said midpoint (M), the outputs of said DC/DC converters (DCDCH, DCDCL) being connected in parallel to the terminals of said traction battery (BATT), said control method being **characterized in that** it includes the steps of:

    - increasing (E7) the power transmitted ($P_H$) by the DC/DC converter of higher efficiency (DCDCH) among said DC/DC converters (DCDCH, DCDCL), and reducing (E7) the power transmitted by the other of said DC/DC converters (DCDCL), with respect to an initial operation of said charging system (SYS).

2. Control method according to Claim 1, **characterized in that** said increasing and reducing steps (E7) are preceded by a step of characterizing (EC) the efficiencies of said DC/DC converters (DCDCH, DCDCL).

3. Control method according to Claim 2, **characterized in that** said characterizing step (EC) includes the sub-steps of:

    - charging (E2) the traction battery (BATT) by using only one of said DC/DC converters (DCDCH), the charging power for said traction battery (BATT) progressing according to a power ramp,
    - charging (E3) the traction battery (BATT) by using only the other of said DC/DC converters (DCDCL), the charging power for said traction battery (BATT) progressing according to a power ramp,
    - real-time measuring (E2, E3) of the power entering said rectifier input stage (RED), and of the charging power entering said traction battery (BATT) during said charging sub-steps (E2, E3),
    - calculating (E4) the ratios as a function of said charging power between firstly said measurements of power entering said traction battery (BATT) and secondly said measurements of power entering said rectifier input stage (RED), for each of said charging sub-steps (E2, E3).

4. Control method according to Claim 3, **characterized in that** it includes a step of selecting (E5) said DC/DC converter of higher efficiency (DCDCH) as a function of a charging power setpoint, during which said DC/DC converter of higher efficiency (DCDCH) is chosen as that which has the best ratio calculated in the characterizing step (EC) for the charging power corresponding to said charging power setpoint.

5. Control method according to any one of Claims 1 to 4, **characterized in that** it includes a step (E6) of modifying setpoints of the currents arriving at the terminals of said capacitors, said currents being regulated by said rectifier input stage (RED) control, the setpoints of the voltages at the input side of said DC/DC converters (DCDCH, DCDCL) being kept equal, said modified setpoints of currents maximizing, for a charging power setpoint for said traction battery (BATT), the overall efficiency ($\rho$) of said charging system (SYS) expressed as a function of said charging power setpoint and of the efficiencies of said DC/DC converters (DCDCH, DCDCL) multiplied by the respective input powers thereof.

6. Control method according to any one of Claims 1 to 5, **characterized in that** it includes a step of deactivating (E6) the DC/DC converter of lower efficiency (DCDCL) among said DC/DC converters (DCDCH, DCDCL), when said supply network (RES) is a single-phase supply network.

7. Control method according to any one of Claims 1 to 6, **characterized in that** said rectifier input stage (RED) is also a power factor correction and voltage boosting stage, and **in that** said DC/DC converters (DCDCH, DCDCL) each include a galvanic isolation transformer.

8. Control method according to any one of Claims 1 to 7, **characterized in that** said rectifier input stage (RED) includes input coils (L1, L2, L3) and a three-phase Vienna rectifier, each of said input coils (L1, L2, L3) being connected to a different input of the diode bridge of said three-phase Vienna rectifier.

Fig.1

```
┌─────────────────────────────────────┐
│       Démarrage de la charge        │  E1
└─────────────────────────────────────┘
                   │
       ┌ ─ ─ ─ ─ ─ ▼ ─ ─ ─ ─ ─ ─ ─ ┐
       │ ┌───────────────────────────┐ │
       │ │ -  Chargement utilisant   │ │ E2
       │ │        DCDCH seul         │ │
       │ │   -  Mesures de puissances│ │
       │ └───────────────────────────┘ │   EC
       │              │                │
       │ ┌────────────▼──────────────┐ │
       │ │ -  Chargement utilisant   │ │ E3
       │ │        DCDCL seul         │ │
       │ │   -  Mesures de puissances│ │
       │ └───────────────────────────┘ │
       │              │                │
       │ ┌────────────▼──────────────┐ │
       │ │ Calcul de rapports de     │ │ E4
       │ │        puissance          │ │
       │ └───────────────────────────┘ │
       └ ─ ─ ─ ─ ─ ─ ▼ ─ ─ ─ ─ ─ ─ ─ ┘
```

Fig.2

Fig.3

Fig.4

**EP 3 685 485 B1**

## RÉFÉRENCES CITÉES DANS LA DESCRIPTION

### Documents brevets cités dans la description

- FR 1662398
- FR 1659116
- FR 1659118
- FR 1660788